# EUROPEAN PATENT APPLICATION

(11) **EP 3 995 418 A1**
(43) Date of publication of application: **11.05.2022**
(21) Application number: 20206481.2
(22) Date of filing: 09.11.2020
(51) Int. Cl.: B65G 39/02, B65G 43/02, G05B 23/02, G01B 7/16

(54) **CARRIER ROLLER WITH SENSOR FOR SENSING SIGNALS BEING CHARACTERISTIC FOR TEMPERATURE AND STRAIN AT A ROLLER SHAFT**

(71) Applicant: Montanuniversität Leoben, 8700 Leoben (AT)
(72) Inventor: Moser, Peter, 8700 Leoben (AT); Kern, Wolfgang, 8055 Seiersberg (AT); Grießer, Thomas, 8792 St. Peter Freienstein (AT); Feiel, Susanne, 8010 Graz (AT)
(74) Representative: Dilg, Haeusler, Schindelmann Patentanwaltsgesellschaft mbH

(57) **Abstract**

A carrier roller (100) for carrying goods by a conveyor device (150), the carrier roller (100) comprising a shaft (102), a rotatable drum (104) mounted on the shaft (102), a bearing (106) arranged between the shaft (102) and the drum (104) for enabling the drum (104) to rotate relative to the shaft (102), and a sensor (108) arranged at the shaft (102) and configured for sensing sensor signals being characteristic for temperature and strain at the shaft (102).

## Description

The invention relates to a carrier roller for carrying goods by a conveyor device, to a conveyor device, and to a method of manufacturing a carrier roller.

A belt conveyor system may comprise two or more pulleys, with an endless loop of carrying medium, i.e. a conveyor belt, that rotates about them. One or more of the pulleys may be powered, moving the belt and goods on the belt forward. A powered pulley may be denoted as drive pulley while an unpowered pulley may be called idler pulley. There are different classes of belt conveyors: material handling belt conveyors (such as those moving boxes along inside a factory) and bulk material handling belt conveyors (such as those used to transport large volumes of resources and agricultural materials, such as grain).

Pulleys or carrier rollers of conveyor devices are subject to high mechanical load over a long lifetime. This may result in continued wearout, and finally blockage or breakage.

However, failure of a carrier roller may cause a severe economic damage and may even be a significant danger in terms of operation safety of a conveyor device.

It is an object of the invention to identify or predict failure of a carrier roller in due time and with low effort.

In order to achieve the object defined above, a carrier roller for carrying goods by a conveyor device, a conveyor device, and a method of manufacturing a carrier roller according to the independent claims are provided.

According to an exemplary embodiment of the invention, a carrier roller for carrying goods by a conveyor device is provided, the carrier roller comprising a shaft, a rotatable drum mounted on the shaft, a bearing arranged between the shaft and the drum for enabling the drum to rotate relative to the shaft, and a sensor arranged at the shaft and configured for sensing sensor signals being characteristic for temperature and strain at the shaft.

According to another exemplary embodiment of the invention, a conveyor device for conveying goods is provided, the conveyor device comprising a plurality of carrier rollers (for instance at least 100 carrier rollers, in particular at least 1000 carrier rollers, more particularly at least 10000 carrier rollers) having the above-mentioned features for carrying the goods during conveying.

According to still another exemplary embodiment of the invention, a method of manufacturing a carrier roller for carrying goods in a conveyor device is provided, the method comprising mounting a rotatable drum on a shaft, arranging a bearing between the shaft and the drum for enabling the drum to rotate relative to the shaft, arranging a sensor at the shaft, and configuring the sensor for sensing sensor signals being characteristic for temperature and strain at the shaft.

In the context of this application, the term "carrier roller" or support roller may particularly denote a support and guide element for goods being transported or conveyed by a conveyor device (in particular for a belt conveyor device in which a conveyor belt which loops endlessly between a head and rear drum or pulley is supported by carrier rollers). Said support function may hence be carried out by carrier rollers. In particular, the carrier roller may be an unpowered or idler pulley.

In the context of this application, the term "shaft" may particularly denote a central rod which may define a rotation axis of a carrier roller. During operation of the carrier roller, such as shaft may be stationary. In particular, a shaft may be configured for being connected to a support structure (such as a support frame) of a conveyor device.

In the context of this application, the term "rotatable drum" may particularly denote a hollow (in particular hollow circular cylindrical) body configured for accommodating at least part of a shaft in an interior lumen. Such a drum may be rotationally symmetric and may be mountable for rotation about or around a stationary shaft.

In the context of this application, the term "bearing" may particularly denote a member that constrains relative motion to only a desired motion, and reduces friction between relatively moving parts, i.e. shaft and rotatable drum. The design of the bearing may, for example, provide for a free rotation of the drum around a fixed axis defined by the shaft. Rotary bearings may hold rotating components, such as the rotatable drum, with respect to the stationary shaft or axle. In a ball bearing or roller bearing, to reduce sliding friction, rolling elements such as rollers or balls with a circular cross-section may be located between journals of the bearing.

In the context of this application, the term "sensor configured for sensing sensor signals being characteristic for temperature and strain" may particularly denote a sensor capable of outputting sensor data which are characteristically influenced by both a local temperature at the position of the sensor and a local value of strain. Preferably, such sensor signals are not evaluated to determine a specific temperature value and a specific strain value, in contrast to this these sensor signals may be processed only for determining whether significant changes of temperature and/or strain have occurred at the shaft, as indicated for instance by another (actually determined) sensor parameter such as ohmic resistance of sensor active material of the sensor. In other words, a value or a development over time of a sensor parameter (such as the ohmic resistance) may be determined based on the sensor signals, said determined sensor parameter(s) being influenced by other parameters, i.e. a temperature and strain combination, which are, in turn, a fingerprint for a state (for instance a failure state) of the carrier roller to be determined. Hence, sensor signals being influenced by temperature and strain at the shaft of the carrier roller can be processed only to such an extent that changes or deviations of ohmic resistance as indicated by said sensor signals can be identified as an indication of state information characterizing the state of the carrier roller. Strain may particularly denote a geometrical measure of deformation at the carrier roller, in particular at the shaft thereof. What concerns strain in such a body, a deformation may result from stress induced by applied and/or intrinsic forces. The relation between stress and induced strain may be expressed by Hooke's law for linear elastic materials. On the other hand, irreversible deformations remain even after stresses have been removed, in particular plastic deformation, which occurs in material bodies after stresses have attained a certain threshold value known as the elastic limit or yield stress.

According to an exemplary embodiment, a carrier body with integrated sensor may be provided for sensing or detecting information allowing to determine that temperature and/or strain show a specific behavior. By sensing information indicating significant changes of one or both parameters of said parameter pair (preferably at a shaft) of a carrier roller, the actual or upcoming presence of a failure event (for instance in terms of blockage or breakage) may be reliably detected, or a high likelihood of a future failure event can be predicted with high accuracy. Thus, severe damages and dangerous operation conditions may be precisely avoided by the detection of information indicative of the temperature-strain parameter pair in due time. It has turned out that in particular the combination of the physical parameters strain and temperature provide meaningful information for reliably determining or predicting failure of the carrier roller. Advantageously, this may prevent a highly undesired halt in a conveyor line and may avoid an event in which a belt undesirably stops moving. Although at least the mentioned two physical parameters strain and temperature are considered to provide particularly meaningful relevant state information concerning a carrier roller, it may be preferably sufficient to actually sense one other parameter (such as the ohmic resistance of the sensor) which is influenced by both temperature and strain changes. Hence, a single parameter may be used for determining state information concerning the carrier roller with particularly very low effort. This is advantageous in particular in conveyor devices with a huge plurality of carrier rollers, because this allows a very simple instrumentation of each carrier roller enabling to monitor the huge plurality of carrier rollers simultaneously with low effort.

In the following, further exemplary embodiments of the carrier roller, the conveyor device, and the method will be explained.

In an embodiment, the conveyor device further comprises a belt and a drive unit for driving the belt for conveying the goods, wherein the carrier rollers are arranged within the belt for carrying the goods during conveying. In the context of this application, the term "belt" may particularly denote the carrying medium of a belt conveyor device. Such a belt may be an endless loop of carrying medium that rotates about carrier rollers. For instance, a length of such a belt may be at least 10 m, in particular at least 100 m, more particularly at least 1000 m. It is possible that such a belt moves with a velocity of at least 1 m/s or even of at least 5 m/s. In the context of this application, the term "drive unit" may particularly denote an entity providing drive energy for driving the rotatable drum. For instance, such a drive unit may be an electric motor. In particular, the conveyor device may comprise one or more powered pulleys or drive pulleys being actively driven by a drive unit. Such one or more drive pulleys may also drive the belt which may be mechanically coupled with the one or more drive pulleys.

In an embodiment, the sensor is configured for sensing sensor signals indicative of an ohmic resistance of a sensor active material of the sensor. In this context, the sensor may be equipped with a sensor active material experiencing a change of the value of its ohmic resistance depending on its temperature and depending on its strain. Thus, it is not necessary that the values of temperature and strain are in fact determined. In contrast to this, it may be sufficient to measure the ohmic resistance of the sensor structure, which is characteristically influenced by temperature and strain. In other words, when temperature changes occur at the shaft, the ohmic resistance of the sensor active material changes as well. Correspondingly, when strain changes at the shaft, the ohmic resistance of the sensor active material changes as well. The determined value of the ohmic resistance may then be indicative of whether a present operation state of the carrier roller is critical (for instance indicates an existing or upcoming failure) or is normal. For instance, a sudden increase or a sudden decrease of the value of the ohmic resistance over time may indicate a critical or abnormal operation state of the carrier roller with low computational burden. It may for instance be sufficient to detect a characteristic curve concerning time over ohmic resistance of the sensor active material. By comparing changes of resistance over time in such a characteristic curve with corresponding predetermined data (for instance stored in a database) indicating a target behavior, an abnormal operation state of the carrier roller may be identified easily and accurately based on a measurement of ohmic resistance only.

In an embodiment, the sensor is configured for a combined sensing of information indicative of temperature and strain which both influence a common sensor signal (in particular a common electric sensor signal). Hence, a single detection entity, in particular a single detection structure, may be provided being capable of outputting sensor signals which are influenced by a local temperature at the position of the sensor and by a local value of strain. Rather than providing two separate sensors, a combined temperature and strain sensor may be sensitive to both physical parameters. Highly advantageously, a combined sensing of temperature and strain may be accomplished by a single common sensor, which contributes to a compact design of the sensor and of the carrier roller as a whole. Furthermore, such a tiny single sensor may be capable of carrying out the sensing task without disturbing function of the carrier roller, in particular rotation of the drum with respect to the shaft mediated by the bearing. Contrary to the combination of two separate sensing entities (such as for instance a strain gauge and a PT-100 element for temperature sensing), a preferred embodiment implements a combined strain-temperature influenced sensor which renders the carrier roller more compact and reduces the effort.

In an embodiment, the sensor is a single integral sensor structure configured for sensing sensor signals being characteristic for temperature and strain. Thus, a common sensor structure, preferably embodied as a patterned thin-film with ohmic resistance depending on temperature and strain, may be implemented for providing not only one parameter information, but information concerning a combination of two physical parameters, i.e. temperature and strain. A single sensor signal indicating a change of one or both of said parameters may render the determination of state information concerning the carrier roller particularly simple. Such an embodiment not only provides a highly compact sensor configuration, but also excludes sensor artefacts resulting from different physical structures one for sensing temperature and the other one sensing strain.

In an embodiment, the sensor is configured for sensing sensor signals being characteristic for temperature and strain of at least part of the shaft. The shaft of a carrier roller has turned out as a particularly appropriate position for sensing temperature and strain by a single combined integral sensor structure. By such a positioning of the sensor, various roller-specific failure types may be precisely and accurately measured, such as blockage of the bearing next to the shaft and/or breakage at the shaft and/or of the drum.

In an embodiment, the sensor comprises or consists of electrically conductive ink. Conductive ink may in particular denote a liquid, suspension or paste that, in particular after curing or solidifying, results in a printed object which conducts electricity. It is been found that printed structures, for instance made of conductive ink, enable the measurement of both temperature and strain. More particularly, conductive ink shows a temperature-dependence of its electrical resistance. It has also been found that conductive ink shows a strain-dependence of its electrical resistance. In one embodiment, conductive ink may be printed directly on the shaft. In another embodiment, conductive ink may be applied to a substrate (such as an adhesive foil) which may then be attached, in turn, on the shaft.

For example, electrically conductive ink may be created by infusing graphite, silver and/or other conductive materials into ink. For instance, a silver epoxy based conductive adhesive may be used for the sensor (and/or connected electric circuitry), in particular when printed on a support or substrate. For instance, such a substrate may be a polymer, for instance a polymer foil. As a material for such a polymer substrate, for instance polyimide (PI) or polyethylene terephthalate (PET) may be used.

In an embodiment, the sensor is printed on at least part of the shaft. Advantageously, printing is a purely additive process producing little to no waste streams which then have to be recovered or treated. Thus, the manufacturing effort may be kept small and resources may be used highly efficiently by printing the sensor.

In an embodiment, the sensor is applied along an entire longitudinal extension of the shaft. This has the advantage that a failure event can be detected at any position along the shaft, regardless where it occurs.

In another embodiment, the sensor is applied along only part of a longitudinal extension of the shaft. Such an embodiment may be advantageous, since the amount of sensor material, for instance printed conductive ink, may be very small when applying such sensor material only along a sub part of the axial extension of the shaft. Preferably, the one more positions along the extension of the shaft where a sensor structure is to be applied may be selected in accordance with expert knowledge and/or theoretical models which may identify particularly critical positions of the shaft in terms of failure events. A low material consumption may then be advantageously combined with a high reliability in terms of sensing upcoming or already occurring damages of the carrier roller.

In an embodiment, the sensor is applied only to at least one of the groups consisting of on one or both of two opposing end portions of the shaft, and one or more interface regions between shaft and bearing. An analysis has shown that in particular a transition between shaft and bearing is a critical position for failure modes such as blockage or breakage. Thus, forming a sensor structure limited to that critically region(s) may keep the manufacturing effort small without compromising on reliability of a prediction or identification of a failure scenario concerning the carrier roller.

In an embodiment, the sensor is applied on a surface portion of a circular cylindrical shaft. Such an embodiment has the advantage that the sensor structure may be applied, formed, adhered, attached or deposited directly on an exposed surface of the shaft itself without the need of processing the shaft before applying sensor material. This keeps the manufacturing effort low.

In an embodiment, the sensor is applied in a recess, and particular in a groove, formed in the shaft. When the sensor structure is applied into a recess of the shaft, the sensor structure does not disturb the shaft function. Furthermore, applying the sensor structure in a recess may ensure that the sensor structure can be reliably protected against mechanical damage during use of the carrier roller. During operation, the drum may rotate with respect to the shaft with the bearing in between. Hence, an exposed and unprotected sensor structure applied to the shaft may be prone to abrasion or the like. When hiding or retracting the sensor structure in a shaft recess, the sensor structure can be securely protected against damage during use. The lifetime of the carrier roller can thus be extended.

In an embodiment, the carrier roller comprises electric circuitry electrically connected with the sensor and configured for conducting and/or processing sensor signals generated by the sensor. For instance, such an electric circuitry may function for electrically conducting sensor signals detected by the sensor to an evaluation unit for evaluation. Additionally or alternatively, the electric circuitry may pre-process (for instance filter) the sensor data. In yet another embodiment, the sensor data captured by the sensor may be processed by the electric circuitry until a detected temperature and/or strain characteristic is finally extracted from the sensor data.

In an embodiment, at least part of the electric circuitry is arranged at the shaft, in particular at an end portion of the shaft. Hence, the electrical (pre-) processing of the electric sensor data may be carried out at a position very close to the generation of the sensor data, i.e. directly next to the sensor. Consequently, signal losses and the noise level of the sensor data may be kept low and the results of the sensing process may be highly precise.

In an embodiment, at least part of the electric circuitry is printed on the shaft. This keeps the space consumption of the electric circuitry small.

In an embodiment, the sensor and at least part of the electric circuitry form a single integral structure. Advantageously, sensor and electric circuitry (the latter partially or entirely) may thus be formed as different portions of the same physical body, in particular a printed and patterned thin film of electrically conductive material. This may simplify the manufacture, may result in a compact design and may avoid a contact resistance at an interface between sensor and electric circuitry. Advantageously, the sensor structure and at least part of the electric circuitry may form an integral structure and may be made of the same material. This contributes to a compact configuration of the sensor data generation and sensor data evaluation system. Preferably, the sensor structure and the electric circuitry may be printed as a common integral physical structure on the shaft. This reduces the manufacturing effort.

In an embodiment, the carrier roller comprises an identifier, in particular a unique identifier, configured for identifying the carrier roller. Such an identifier may be any physical structure or electronic member which is configured for identifying the specific carrier roller with which the identifier is connected or on and/or in which the identifier is formed. A unique identifier may be an identifier identifying unambiguously only the assigned carrier roller, but no other carrier roller. For example, such an identifier may be a barcode, a QR code, an RFID tag or an alphanumerical code. The electric circuitry may be configured for triggering a communication message when the sensor data is indicative of a failure event of the carrier roller, and may also include identifier data in said communication message.

In an embodiment, the carrier roller comprises a communication unit, in particular a wireless communication unit (for instance a Bluetooth unit and/or a WLAN unit), configured for communicating, in particular for wirelessly communicating, sensor data derived from sensor signals generated by the sensor to a communication partner device, in particular to a mobile phone or a control entity. For instance, such a communication unit may comprise an antenna for transmitting a wireless communication message, for instance via a communication network such as the public Internet or a mobile communication network or an intranet, to a communication partner device. For instance, a user may obtain a message on his mobile phone when a carrier roller of a conveyor device operated by the user shows a failure or when such a failure is predicted. Hence, a user may be informed in real-time about a corresponding risk in terms of operation safety or concerning an urgent need of maintenance, repair or substitution. In one embodiment, a transmission is triggered (for instance by Bluetooth) when a communication partner device enters an operational range of a corresponding wireless communication unit of a respective carrier roller. In another embodiment, a transmission is triggered (for instance by WLAN) in regular time intervals (for instance every 10 minutes).

In a conveyor device in which a large plurality of carrier rollers is provided each equipped with a respective sensor, sensor data or an already determined state information of an assigned carrier roller may be transmitted (preferably wirelessly) from a respective carrier roller to a communication partner device. A corresponding communication message may preferably include sensor data and/or state information on the one hand and information allowing to determine a location of the assigned carrier roller on the other hand. Information allowing to determine a location of the assigned carrier roller may, in one embodiment, include location information determined by the carrier roller itself, for instance by a GPS sensor of the carrier roller. Information allowing to determine a location of the assigned carrier roller may, in another embodiment, include identity information identifying the carrier roller, for instance a unique identifier identifying the carrier roller and included in the communication message. In a database, to which a communication partner device may have access, identities of multiple carrier rollers may be stored, each assigned to a respective location of a respective carrier roller along a conveyor device. Both embodiments may make it possible to quickly determine which of multiple carrier rollers might have a problem and where this carrier roller is located in the conveyor device.

In an embodiment, the carrier roller comprises an output unit, in particular an optical output unit, configured for outputting a perceivable, in particular a visible, signal which is indicative of a result of the combined sensing of sensor signals being characteristic for temperature and strain. Thus, it may be possible that the carrier roller itself comprises a perceivable indicator informing with an alarm signal about a potential issue. Also the absence of an issue may be output by the output unit. For example, one or more light emitting diodes (LEDs) may be provided which may indicate the present operation state of the assigned carrier roller by a color code. For instance, an LED emitting green light may indicate a proper operation of the carrier roller. An LED emitting orange light may indicate a potential upcoming issue without the need for an immediate action. An LED emitting red light may indicate an actual or real danger or the urgent need to take an action.

In an embodiment, the carrier roller comprises a processor configured for processing the sensor signals for determining state information concerning the carrier roller. In this context, the term "state information" may denote information indicative a state (for instance a normal state indicating an ordinary operation or an abnormal state indicating a failure or an upcoming failure) of the carrier roller.

In an embodiment, the processor is configured for determining the state information by determining whether or not the processed sensor signals indicate that an ohmic resistance of a sensor active material of the sensor is within a predefined target range. For instance, an acceptable range of temperatures may be temperatures below 60°C, or temperatures below 80°C, or temperatures in a range from 60°C to 80°C. Abnormal temperatures may for instance be temperatures above 100°C. Hence, it may for instance be possible to identify sudden changes of the resistance of the sensor, as indicated by the sensor signals, and going back to a sudden change of temperature and/or strain at the position of the sensor.

In an embodiment, the processor is configured for determining the state information for determining or predicting a failure of the carrier roller. In particular, such a determined or predicted failure may be a blockage of the bearing or a breakage of the shaft or of the drum. For instance, acceptable intervals of sensor resistance corresponding to acceptable ranges of temperature and/or strain may be defined and may be stored in a database. When an actually sensed sensor resistance value is outside of a corresponding predefined interval, a determined predicted failure may be identified and output. For each failure type (for instance blockage of the bearing, breakage of the shaft, breakage of the drum, etc.), a corresponding range or time dependence of sensor resistance values may be assigned to a respective data set to be stored in a database. In a detection mode, a most likely event may be extracted by comparing sensed sensor resistance values with the data sets in the database and determining a best match. For instance, the database may be created based on expert knowledge, empirical or experimental data, and theoretical models.

In an embodiment, the carrier roller comprises a position determining unit configured of determining a position of the carrier roller. For this purpose, it is for instance possible that the carrier roller is equipped with a GPS (Global Positioning System) module or the like so as to be capable of determining its own position. The electric circuitry may be configured for triggering a communication message when the sensor data is indicative of a failure event of the carrier roller, and for including corresponding position data of a present position of the defective carrier roller in said communication message.

In an embodiment, the shaft comprises a metal, in particular steel. Surprisingly, it has been found that even a robust metallic shaft of a carrier roller shows sufficient strain so that the latter can be precisely detected by a temperature and strain sensor, in particular formed by printing electrically conductive ink directly or indirectly on such a metallic shaft.

In an embodiment, the shaft is a stationary shaft. Hence, the shaft may remain spatially fixed during operation of the carrier roller. Thus, the shaft may neither rotate nor experience a translative motion in a longitudinal direction during use of the carrier roller or the conveyor device. Hence, the carrier roller may be a passive device without active drive unit and supporting goods to be transported moving on a driven belt, for instance. Such a passive configuration may simplify construction of the carrier roller.

In an embodiment, the sensor is applied as a patterned layer, in particular as a two-dimensionally patterned layer. Application of the sensor structure on an underlying substrate may for example be accomplished by printing or depositing a thin film of sensor active material, in particular of conductive ink. In order to further refine the sensor accuracy, a patterned thin film sensor layer may have an elongate conductive wiring, such as a meander shape, a spiral shape, a zig-zag shape, etc. Such geometries may significantly increase the length of the sensor-active structure and may therefore enhance the sensitivity of the electric resistance over temperature and/or strain. Furthermore, applying a two-dimensional thin-film as sensor structure may extend the sensor functionality so that the sensor may be in particular sensitive concerning strain being present along different spatial directions.

In an embodiment, the carrier roller comprises at least one further sensor arranged at the shaft (more specifically arranged at another position at the shaft than the aforementioned sensor) and configured for sensing sensor signals being characteristic for temperature and strain, wherein the sensors are configured for operating independently of each other. When providing multiple sensors at a shaft of a carrier roller, information indicative of a spatial distribution of temperature and/or strain at the shaft may then be determined. This allows to further refine the sensor performance and the information derived concerning potential failure of the carrier roller. In particular, spatially dependent information may be obtained in terms of strain and/or temperature distribution over the extension of the shaft. This may enhance the reliability of sensor data-based conclusions concerning potential failure of the carrier roller and a failure position. In particular, independent sensor data detected by a plurality of sensors both arranged at the shaft of the carrier roller may be evaluated together so that the sensor conclusions may become even more meaningful.

In an embodiment, the method comprises applying the sensor to a substrate by printing, in particular by one of the group consisting of ink-jet printing and screen printing. Ink-jet printing may create a predefined image by propelling droplets of ink onto a substrate for attachment to the shaft or onto the shaft directly. Screen printing is a printing technique where a mesh may be used to transfer ink onto a substrate, except in areas made impermeable to the ink by a blocking stencil. A blade or squeegee may be moved across the screen to fill the open mesh apertures with ink, and a reverse stroke may then cause the screen to touch the substrate momentarily along a line of contact. This may cause the ink to wet the substrate and be pulled out of the mesh apertures as the screen springs back after the blade has passed. However, other printing techniques may be applied as well for creating the printed sensor.

In an embodiment, the method comprises encapsulating the substrate and the printed sensor, in particular by one of the group consisting of laminating, and applying a varnish. In order to protect an exposed sensor structure, in particular when created by conductive ink, it may be possible to cover the sensor by a protection layer. This may prevent damage of the conductive ink during operation of the carrier roller, for instance by abrasion which may occur during rotation of the drum. In one embodiment, a protection layer may be laminated on the sensor, i.e. may be connected by the application of pressure and/or heat. In another embodiment, the sensor structure may be covered with a protective coating, such as a varnish coating.

In an embodiment, the method comprises attaching the substrate with the printed sensor to the shaft. For instance, the substrate may be an adhesive tape which may be simply attached, after printing the sensor structure and optionally after protecting the latter by a protection layer, directly on the shaft.

The aspects defined above and further aspects of the invention are apparent from the examples of embodiment to be described hereinafter and are explained with reference to these examples of embodiment.

The invention will be described in more detail hereinafter with reference to examples of embodiment but to which the invention is not limited.
Figure 1 illustrates a cross-sectional view of a carrier roller according to an exemplary embodiment of the invention.
Figure 2 illustrates a cross-sectional view of a carrier roller according to another exemplary embodiment of the invention.
Figure 3 illustrates a cross-sectional view of an array of carrier rollers mounted on a common support structure according to still another exemplary embodiment of the invention.
Figure 4 illustrates a cross-sectional view of a conveyor device comprising a plurality of carrier rollers according to an exemplary embodiment of the invention.
Figure 5 illustrates a cross-sectional view of a carrier roller according to yet another exemplary embodiment of the invention.
Figure 6 illustrates cross-sectional views of structures obtained during manufacturing a sensor for a carrier roller according to an exemplary embodiment of the invention.

The illustrations in the drawings are schematic. In different drawings, similar or identical elements are provided with the same reference signs.

Before, referring to the drawings, exemplary embodiments will be described in further detail, some basic considerations will be summarized based on which exemplary embodiments of the invention have been developed.

According to an exemplary embodiment of the invention, a roller for a conveyor belt may be provided with an electric resistance sensor at a shaft about which a drum may rotate. Detected resistance may provide combined temperature and strain information at the shaft of the carrier roller. Descriptively speaking, such a roller with integrated double parameter sensing function may be denoted as digital roller. Advantageously, said combined sensor may be configured for monitoring temperature and force of a support or carrier roller for a conveyor belt system.

Carrying rollers for conveyor belts may function as carrying elements for the conveyor belt and represent critical components for the safe operation of conveyor belts. The lifetime of carrier rollers is usually limited by the failure or blocking of the bearings, which are located in the carrier roller and around which a rotatable drum of the carrier rollers rotates. Over the lifetime, rollers usually rotate many hundreds of millions of times. Another type of failure of carrier rollers is their breakage.

If rollers fail, there is a risk that the conveyor belt above it will be damaged or destroyed, for instance by slitting or tearing. Blocking rollers can also heat up by friction to such an extent that the conveyor belts above them catch fire. Failure of rollers can lead to a catastrophic destruction of conveyor systems and can also lead to the failure of the central conveyor and production facilities of plants.

In order to overcome at least part of the above-mentioned and/or other shortcomings, an exemplary embodiment of the invention provides a carrier roller with a shaft being instrumented with a combined strain and temperature sensor. Highly advantageously, such a combined sensor may be embodied as a structure of electrically conductive ink serving as sensor-active constituent for both temperature and strain sensing. Such a sensor may be equipped with electric or electronic circuitry which may be configured in such a way that a continuous temperature measurement can be carried out and that the deformation of the shaft of the carrier roller(s) can also be measured continuously. This may ensure that irregularities in the operation of carrier rollers can be detected quickly. Advantageously, such an early detection of irregularities may allow to react before a dangerous failure of rollers occurs. For instance, such a reaction may be carried out in terms of predictive maintenance.

During operation, carrier rollers of a conveyor device may have a normal operating temperature of for example up to or around 100°C. If a (for instance digital) load roller begins to fail by starting blocking the bearings, then their temperature may increase. Such a temperature increase can be detected immediately or with very short delay by equipping the shaft with a sensor structure of conductive ink having a temperature-dependent electric resistivity. Furthermore, such a temperature information may be reported to a predefined node (for instance in a communication network) via an electronic circuit.

According to an exemplary embodiment, a support or carrier roller may comprise a shaft, a housing or drum, and a bearing. Furthermore, a combination of temperature and strain sensor may be implemented in the carrier roller.

Preferably, said combined temperature and strain sensor may be made of electrically conductive ink, which may be printed specifically on the roller shaft or applied in another way. In one embodiment, such an electrically conductive ink may be applied over the entire length of the roller shaft. Alternatively, the electrically conductive ink may be applied only in partial areas, in particular in the area of the bearings. In one embodiment, the electrically conductive ink may be applied directly on the shaft surface. Alternatively, the electrically conductive ink may be applied into a recess (such as a groove) formed in the shaft.

Advantageously, electric circuitry (for instance in printed form) may be applied in the area of the shaft head (for instance to a shaft end piece) to register the resistance change of the electrically conductive ink due to temperature changes in the roller shaft and/or due to deformations of the roller shaft. For instance, such an electric circuitry may include further elements such as a power supply, for example by batteries or cables.

In an embodiment, a QR code or other digital code may be formed on the carrier roller to identify the carrying roller. It is also possible to configure the carrier roller with a transmitter to transmit a resistance change to a communication partner device (such as a mobile phone). Such a transmission may be carried out in a wireless way, alternatively in a wired fashion.

Optionally but preferably, the carrier roller may be equipped with an appropriate electronic circuitry with one more light emitting diodes that may be configured to light up in different colors depending on a resistance change which the electrically conductive ink sensor experiences in the event of a temperature change and/or a strain change. In another embodiment, the carrier roller may be provided with a GPS sensor in the area of the shaft head for local positioning of the carrying roller.

In an exemplary embodiment, the application of the electrically conductive ink to the roller shaft can be carried out as follows: In one embodiment, this can be accomplished by screen printing or ink-jet printing or any other printing method. For instance, the conductive ink may be applied to polymeric substrates, such as a thermoplastic film or an elastomer film. Preferably, a layer thickness of such a substrate may be in a range from 1 µm and 10000 µm, preferably from 25 µm to 5000 µm. Such a manufacturing architecture may result in an ink sensor, wherein the printed length may be matched to the support or carrier roller. It is also possible that the electrically conductive ink is applied only over a partial length of the shaft. Preferably, the ink sensor may have printed end contacts for establishing an electrically conductive connection to an electronic circuit. Optionally but advantageously, an appropriate electronic circuit may be provided for measuring the resistance change of the ink sensor(s). Preferably, at least part of such an electronic circuit may also be printed on the carrier roller.

Advantageously, ink sensors produced in the described way may then be encapsulated or shielded, for instance by laminating at least one protection layer on the printed sensor or by applying a protective coating, such as a layer of varnish.

For example, connections from the ink sensors may then led to the shaft head and may be connected to electronics on the shaft head. A sealing material (preferably polymer-based, for example silicone, polyurethane or an acrylic resin) may be applied to the ink sensors and may be, if necessary, triggered to cure.

Conventionally, carrier rollers of conveyor belts have not been equipped systematically with sensors. A complete or largely complete instrumentation of all conveyor rollers of conveyor belts for the purpose of their continuous monitoring has been considered as economically unfeasible. In contrast so such a high implementation effort, combined temperature-strain sensors according to an exemplary embodiment of the invention, preferably embodied as ink sensors, allow a complete or largely complete instrumentation of all support or carrier rollers of a conveyor device of a belt-type for the purpose of their continuous monitoring with reasonable effort.

According to a preferred embodiment of the invention, a detection of a potential or actual defect of a carrier roller may be carried out based on an instrumentation of shafts of conveyor belts with combined temperature and strain sensors. Preferably, this may be accomplished based on electrically conductive ink to control the operating temperature and deformation properties in an operating mode of the respective carrier roller. Such sensors may be connected to electronic circuitry to continuously transmit, analyze and interpret the data on the temperature and deformation of the shafts, to identify their exact type and to localize the installed position.

In particular, exemplary embodiments of the invention have the advantage of an easy instrumentation of carrier rollers at low effort. The described sensor architecture may be technically easy to implement and may be easily integrated into a manufacturing process. Moreover, exemplary embodiments of the invention are compatible with a continuous use of conveyor belt systems at reasonable effort. Advantageously, data transfer of sensor data (in particular raw sensor data or pre-processed or completely processed sensor data) to mobile apps running on portable devices or to other communication partner devices are possible. A shorter maintenance and service time due to the precise location of a damaged carrier roller is a further advantage. Moreover, time-consuming checks to limit the damage of carrier rollers may be suppressed or even eliminated. Furthermore, exemplary embodiments enable an improved or even optimized spare parts management with the result of a reduction of the logistic effort. Beyond this, the sensor architecture according to exemplary embodiments of the invention involves a lower risk of severe, dangerous and lengthy damage events such as belt or plant damage.

Exemplary embodiments of the invention are based on findings of the present inventors according to which laboratory tests have shown that electrically conductive ink is capable of measuring deformation of a body such as a shaft of a carrier roller. Moreover, electrically conductive ink has turned out to be appropriate to measure temperature changes. Apart from this, it has been found that electrically conductive ink can be applied to steel shafts and can be prepared in such a way that strain and temperature changes can be precisely measured. In particular, the change in resistance of the conductive ink can be measured and correlated with strain and temperature changes.

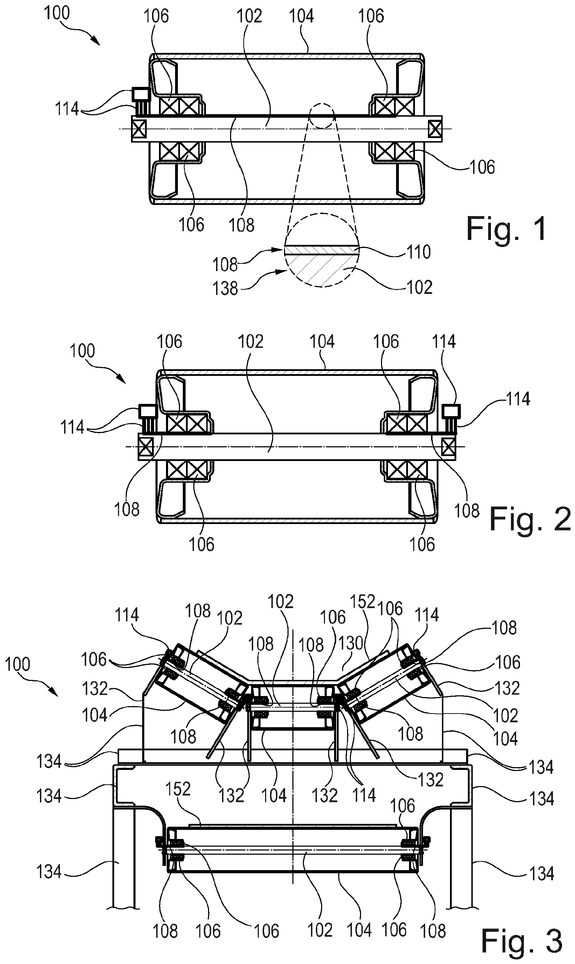

**Figure 1** illustrates a cross-sectional view of a carrier roller 100 according to an exemplary embodiment of the invention.

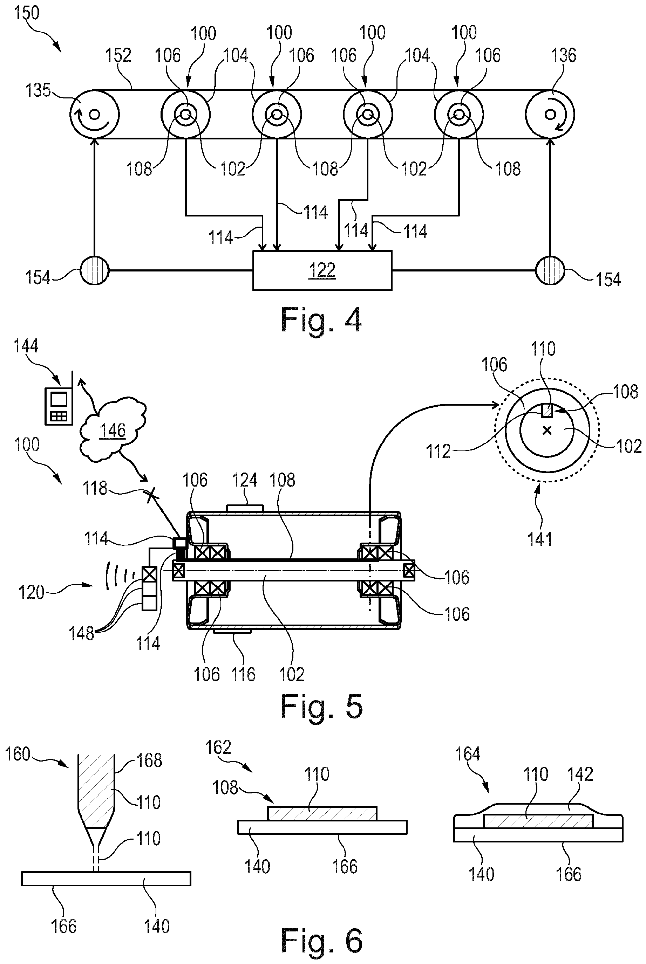

The illustrated carrier roller 100 serves for carrying goods (not shown) when the carrier roller 100 is implemented in a conveyor device 150, as the one shown in Figure 4. For instance, the carried goods may be heavy boxes or bulk goods such as grain.

The carrier roller 100 of Figure 1 comprises a stationary central shaft 102, for instance a steel rod. Although not shown in Figure 1, shaft 102 may be configured (for instance may comprise a mounting fixture 132, see Figure 3) for being fixed on a mounting structure (see reference sign 134 in Figure 3) of the conveyor device 150.

Furthermore, the carrier roller 100 has an exterior rotation-symmetric rotatable drum 104 which is mounted on or around the shaft 102. The sleeve-shaped drum 104 may have a central lumen defining a central axis along which the shaft 102 extends. During operation of the carrier roller 100, the drum 104 may rotate about its central axis, thereby carrying and transporting goods.

Beyond this, the carrier roller 100 comprises a pair of bearings 106 which are arranged between the shaft 102 on the one hand and the drum 104 on the other hand. More precisely, a first bearing 106 is arranged at one end portion of shaft 102 and drum 104, whereas a second bearing 106 is arranged at the opposing other end portion of shaft 102 and drum 104. The bearings 106, which may for instance be ball bearings, are provided for enabling the rotatable drum 104 to rotate in a low-friction way relative to the stationary shaft 102.

A single integral sensor 108 is arranged at the shaft 102 and is configured for sensing sensor signals being characteristic for temperature and strain at the shaft 102. The physical parameter being actually measured by the sensor 108 is its electric resistance, which depends on temperature and strain at the shaft 102. Temperature and strain are considered as parameters being characteristically influenced, changed or modified when the carrier roller 100 shows a defect, such as blockage of breakage. When sudden changes of the detected resistance occur with a strength which exceeds a predefined threshold value, the existence of a defect can be assumed. Hence, the sensor 108 is configured for sensing sensor signals indicative of an ohmic resistance of a sensor active material of the sensor 108, wherein the ohmic resistance is influenceable by temperature and strain. In other words, an electric sensor signal created by the single sensor 108 is sensitive concerning both temperature at the position of the shaft 102 at which the sensor 108 is applied, and strain at said position. Thus, the common sensor 108 is configured for a combined sensing of temperature and strain at an exterior surface of the shaft 102.

Highly advantageously, the single sensor 108 is provided as an integral layer structure made of electrically conductive ink 110. For instance, such electrically conductive ink 110 may comprise electrically conductive particles, such as carbon or silver, in a resin matrix (for instance based on epoxy resin).

Advantageously, the sensor 108 can be printed (for instance by ink-jet printing or screen printing) directly on the shaft 102 or indirectly on a substrate (see reference sign 140 in Figure 6) which may then be attached to the shaft 102. More precisely, the sensor 108 can be applied by printing on a surface of the circular cylindrical shaft 102. The printed thin film of conductive ink 110 applied to a lateral area of the circular cylindrical shaft 102, as shown in detail 138 of Figure 1.

In the embodiment according to Figure 1, the sensor 108 is applied along an entire longitudinal extension of the shaft 102. This has the advantage that any issue occurring at any position along the longitudinal extension of the shaft 102 may be detected by the sensor 108. Thus, the configuration of Figure 1 is capable of identifying failure events occurring at each and every longitudinal position of the shaft 102.

As shown as well in Figure 1, carrier roller 100 comprises electric circuitry 114 which is electrically connected with the sensor 108 and which is configured for conducting and/or processing sensor signals generated by the sensor 108. Apart from an electrically conductive wiring, electric circuitry 114 may comprise one or more passive electric elements (such as an ohmic resistance, a capacitance, an inductance, a diode, etc.) and/or any active electric element (such as a transistor, a processor, a semiconductor chip, etc.). For instance, the electric circuitry 114 may comprise a printed circuit board (PCB) (which may be rigid or flexible) on which the mentioned electric elements or components may be mounted. It is also possible that the entire electric circuitry 114 is located at an interior of the carrier roller 100, for instance in a hollow space delimited between shaft 102, drum 104 and bearing 106. Sensor signals may then be transmitted out of the carrier roller 100 in a wireless manner. It may be advantageous if at least part of the electric circuitry 114 is arranged at the shaft 102. Preferably, electric circuitry 114 extends up to an end portion of the shaft 102 so that it is properly accessible from an exterior of the carrier roller 100.

During operation, the sensor 108 may sense, for instance continuously or regularly, ohmic resistance-related sensor data. Said sensor data may be a fingerprint of or may be characteristically influenced by temperature and strain of shaft 102 and may be encoded in one or more electric signals conducted from sensor 108 to electric circuitry 114. The electric circuitry 114 may pre-process or fully process said sensor data for deriving information concerning a potential defect at the shaft 102, which defect may change temperature and/or strain which, in turn, results in changes of the ohmic resistance of the sensor active material of the sensor 108. For instance by comparison with a lookup table or any other kind of data sets which may be stored in a database (not shown), it may be possible to identify the presence of a failure or to identify an upcoming failure of the carrier roller 100 or a part thereof. Examples for such failures are blockage of bearing 106 or breakage of shaft 102 or of the drum 104. When such a real failure or potential failure is detected or predicted based on detected sensor signals, a corresponding action may be taken. Examples for actions which may be taken are the recommendation of maintenance, repair or exchange of a carrier roller 100 or part thereof, output of a warning (for instance as visible or audible warning signal), or termination of operation of the carrier roller 100 or the entire conveyor device 150.

**Figure 2** illustrates a cross-sectional view of a carrier roller 100 according to another exemplary embodiment of the invention.

The embodiment of Figure 2 differs from the embodiment of Figure 1 in particular in that, in the embodiment of Figure 2, sensors 108 are applied along only part of the longitudinal extension of the shaft 102 rather than along its entire longitudinal extension. More specifically, the two sensors 108 (each with connected electric circuitry 114) of Figure 2 are applied only at both opposing end portions of the shaft 102 at an interface between shaft 102 and bearings 106. It has turned out that such interfaces between shaft 102 and bearings 106 at the two opposing end portions of the shaft 102 are particularly prone to failure and are particularly sensitive concerning parameter changes when a failure occurs or is about to occur.

More specifically, the embodiment of Figure 2 comprises two sensors 108 arranged at different positions of the shaft 102, each close to a respective one of two bearings 106. Each of said sensors 108 is configured for a combined sensing of temperature and strain at the assigned position of the shaft 102 by detecting the local ohmic resistance. The two sensors 108 (or more generally: the plurality of sensors 108) are configured for operating independently from each other. As a result, the data measured by the multiple sensors 108 may be less prone to artefacts, may be more reliable, and may also be capable of delivering spatially dependent information.

Moreover, a separate electric circuitry 114 is provided for each of the two opposing sensors 108 which allows to evaluate the respective sensor signal individually. This may also allow to obtain failure information with spatial resolution. In other words, not only the presence or absence of a failure or an upcoming failure may be detected, but also information about the position of the failure may be derived in the embodiment of Figure 2.

**Figure 3** illustrates a cross-sectional view of an array of multiple carrier rollers 100 according to still another exemplary embodiment of the invention.

The embodiment of Figure 3 differs from the embodiment of Figure 2 in particular in that, according to Figure 3, an array of multiple carrier rollers 100 of the type of Figure 2 is shown.

Three of these carrier rollers 100 are arranged side-by-side or laterally from each other, wherein axes of the shafts 102 of these three carrier rollers 100 are slanted with respect to each other. More specifically, a central carrier roller 100 may have a horizontally shaft axis, whereas the left-hand side carrier roller 100 and the right-hand side carrier rollers 100 each have a slanted shaft axis so that the upper surfaces of the rotatable drums 104 of said three carrier rollers 100 delimit, together with a belt 152, a concave upper surface defining an accommodation volume 130 for accommodating goods (not shown) to be conveyed or transported.

A further carrier roller 100 is arranged beneath the three side-by-side arranged carrier rollers 100 and extends over a horizontal range which is larger than the horizontal range over which each individual of the three side-by-side arranged carrier rollers 100 extends.

As can be taken from Figure 3 as well, belt 152 covers the upper surfaces of all carrier rollers 100 of Figure 3. The belt 152 forms part of a conveyor device 150 of the type as shown in Figure 4, which will be described below in further detail.

Referring to Figure 3, each shaft 102 is provided with a mounting fixture 132 for mounting the assigned carrier roller 100 on a mounting structure 134 (such as a mounting frame) of the conveyor device 150.

**Figure 4** illustrates a cross-sectional view of a conveyor device 150 comprising a plurality of carrier rollers 100 according to an exemplary embodiment of the invention.

The conveyor device 150 according to Figure 4 is configured for conveying goods, such as large boxes or bulk goods. For this purpose, the conveyor device 150 comprises an endless belt 152, which is configured as a closed band structure. Two drive drums 135, 136 are provided inside of the belt 152 and are drivable by a drive unit 154 to rotate. The drive unit 154 may for instance be an electric engine. When the drums 135, 136 are driven to rotate by the drive unit 154, the belt 152 is moved as well in a circumferential direction for conveying the goods.

Furthermore, the plurality of carrier rollers 100 (for instance with the properties according to Figure 1 to Figure 3 or Figure 5) may be arranged as well within the belt 152 for carrying or supporting the goods during conveying. When the belt 152 moves, the drums 104 of the carrier rollers 100 may move as well together with the belt 152.

Figure 4 shows that the conveyor device 150 additionally comprises a processor 122, such as a computer, a central processing unit (CPU) or a microprocessor. The processor 122 may be provided with the sensor data sensed by the sensors 108 of the carrier rollers 100. Moreover, the processor 122 may be configured for processing the transmitted sensor data resulting from the combined sensing of temperature and strain for determining or predicting a roller failure, such as a blockage of the bearing 106 or a breakage of the shaft 102 of a respective one of the carrier rollers 100. When such a dangerous event is detected, the processor 122 may for instance control the drive unit(s) 154 to stop.

**Figure 5** illustrates a cross-sectional view of a carrier roller 100 according to yet another exemplary embodiment of the invention.

The embodiment of Figure 5 is similar to the embodiment of Figure 1 but shows some additional features. Any of such features may however also be implemented in other embodiments of the invention, such as the embodiments of Figure 2 to Figure 4.

According to Figure 5, the sensor 108 is applied in a groove-shaped recess 112 which is formed in the shaft 102, rather than being applied on a circular cylindrical surface of the shaft 102 as in Figure 1. This is illustrated in a detail 141 of Figure 5 showing a cross-section of the shaft 102. By applying conductive ink 110 in a cavity-shaped groove, the conductive ink 110 is protected against mechanical load exerted during operation of the carrier roller 100. As a result, the electrically conductive ink 110 is reliably protected against abrasion. Consequently, the embodiment of Figure 5 has a long lifetime.

Furthermore, an exterior surface of the carrier roller 100 is provided with an identifier 116, which may be preferably a unique identifier 116. The identifier 116 is configured for identifying the carrier roller 100. For instance, the identifier 116 may be a QR code which may be embossed in, printed on or attached to any element of the carrier roller 100, such as an exposed surface of the drum 104, an exposed surface of bearing 106, or an exposed surface of the shaft 102. When the identifier 116 is detected, for instance when the QR code is scanned by a mobile phone or another optical detector, the identity (for instance a product type) of the assigned carrier roller 100 may be determined. In a scenario in which the sensor 108 detects a failure of the carrier roller 100, the identity (for instance a product type) of the damaged carrier roller 100 may be easily determined, and the carrier roller 100 may be substituted by another carrier roller of the same product type, etc.

Moreover, the carrier roller 100 of Figure 5 comprises a wireless communication unit 118, such as an antenna coupled with a processor (not shown). The communication unit 118 is configured for wirelessly communicating sensor data captured by the sensor 108 (such as raw sensor data, pre-processed sensor data or even fully processed sensor data in form of information indicating a failure of the carrier roller 100) to a communication partner device 144, such as a mobile phone. Said communication may be carried out over a communication network 146, such as the public Internet or a mobile communication network. In a scenario in which the sensor 108 detects a failure of the carrier roller 100, a user operating the communication partner device 144 at a remote location may be informed in real time about the detected potential or predicted failure of the carrier roller 100. The user may then take the necessary steps in due time to avoid an even more severe danger.

As shown, the carrier roller 100 may further comprise an optical output unit 120 configured for outputting a visible signal which is indicative of a result of the combined sensing of sensor signals being characteristic for temperature and strain and/or indicative of a conclusion concerning a failure of the carrier roller 100. For instance, the optical output unit 120 may comprise a plurality of light emitting devices 148 which can be operated in accordance with a detection result of the sensor 108. For instance, a light source emitting green light may indicate a proper operation of the carrier roller 100. A light source emitting orange light may indicate a potential upcoming issue. A light source emitting red light may indicate an actual or real danger or the urgent need to take an action.

Furthermore, the carrier roller 100 of Figure 5 comprises a position determining unit 124, such as a GPS module, which may be configured for determining a position of the carrier roller 100. With position data indicating a position of the carrier roller 100 suffering from a failure, it can be easily identified which carrier roller 100 of a large plurality of carrier rollers 100 needs maintenance, repair or substitution. Such position information of a carrier roller 100 delivering sensor data indicating a failure can for instance also be transmitted to the communication partner device 144 by wireless transmission.

**Figure 6** illustrates cross-sectional views of structures obtained during manufacturing a sensor 108 for a carrier roller 100 according to an exemplary embodiment of the invention.

Referring to reference sign 160, a printer device 168 (such as an ink-jet printer) may be used for applying conductive ink 110 is a basis for the sensor 108 to a substrate 140. Conductive ink 110 may for instance comprise carbon, silver, copper and/or nickel as electrically conductive material. Such an electrically conductive material may be embedded in a matrix, for instance comprising a resin and/or a solvent, etc. Substrate 140 may for instance be a polymer substrate. Preferably, substrate 140 is elastic, flexible or bendable. The printer device 168 and the substrate 140 may be moved relative to each other so as to print any desired thin film pattern of sensor 108 on the substrate 140. Alternatively, the printer device 168 may apply a continuous two-dimensional sensor thin film on substrate 140, wherein the thin film may be subsequently etched using an appropriate mask so as to form a desired pattern. In order to further refine the sensor accuracy, such a patterned thin film sensor layer may for instance have a meander shape, a spiral shape, a zig-zag shape, etc. After application to substrate 140, the formed sensor structure may be cured.

Referring to reference sign 162, a conductive ink-based sensor 108 may then be obtained on the substrate 140.

Referring to reference sign 164, the method may thereafter comprise encapsulating the substrate 140 and the printed sensor 108 by laminating a layer 142 or by applying a layer 142 of varnish on the substrate 140 and the printed sensor 108. Layer 142 protects sensor 108 during operation of a carrier roller 100.

Although not shown, the method may then comprise attaching the substrate 140 with the printed sensor 108 and the protection layer 142 to the shaft 102. In order to simplify this attachment process, a main surface of the substrate 140 opposing another main surface thereof on which the printed sensor 108 is formed may be covered with an adhesive 166. Thus, the sticky sheet of Figure 6 may simply be adhered on the shaft 102 (not shown in Figure 6).

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

Implementation of the invention is not limited to the preferred embodiments shown in the figures and described above. Instead, a multiplicity of variants is possible which use the solutions shown and the principle according to the invention even in the case of fundamentally different embodiments.

## Claims

1. A carrier roller (100) for carrying goods by a conveyor device (150), the carrier roller (100) comprising:
a shaft (102);
a rotatable drum (104) mounted on the shaft (102);
a bearing (106) arranged between the shaft (102) and the drum (104) for enabling the drum (104) to rotate relative to the shaft (102); and
a sensor (108) arranged at the shaft (102) and configured for sensing sensor signals being characteristic for temperature and strain at the shaft (102).

2. The carrier roller (100) of claim 1, wherein the sensor (108) is configured for sensing sensor signals indicative of an ohmic resistance of a sensor active material of the sensor (108), wherein the ohmic resistance is influenceable by temperature and strain.

3. The carrier roller (100) of claim 1 or 2, wherein the sensor (108) is a single integral sensor structure configured for sensing sensor signals being characteristic for both temperature and strain.

4. The carrier roller (100) of any of claims 1 to 3, wherein the sensor (108) is configured for sensing sensor signals being characteristic for temperature and strain of at least part of the shaft (102).

5. The carrier roller (100) of any of claims 1 to 4, comprising at least one of the following features:
wherein the sensor (108) comprises or consists of electrically conductive ink (110);
wherein the sensor (108) is a printed structure printed on at least part of the shaft (102) or on a substrate (140) attached to the shaft (102);
wherein the sensor (108) is applied along an entire longitudinal extension of the shaft (102);
wherein the sensor (108) is applied along only part of a longitudinal extension of the shaft (102), wherein in particular the sensor (108) is applied only at least one of the group consisting of one or both of two opposing end portions of the shaft (102), and one or more interface regions between shaft (102) and bearing (106);
wherein the sensor (108) is applied on at least part of a lateral area of a circular cylindrical shaft (102),
wherein the sensor (108) is applied in a recess (112), in particular in a groove, formed in the shaft (102);
comprising electric circuitry (114) electrically connected with the sensor (108) and configured for conducting and/or processing sensor signals generated by the sensor (108).

6. The carrier roller (100) of claim 5, comprising at least one of the following featu res:
wherein at least part of the electric circuitry (114) is arranged at the shaft (102), in particular at and/or connected to an end portion of the shaft (102);
wherein at least part of the electric circuitry (114) is a printed structure printed on the shaft (102);
wherein the sensor (108) and at least part of the electric circuitry (114) form a single integral structure.

7. The carrier roller (100) of any of claims 1 to 6, comprising at least one of the following features:
comprising an identifier (116), in particular a unique identifier (116), configured for identifying the carrier roller (100);
comprising a communication unit (118), in particular a wireless communication unit (118), configured for communicating, in particular for wirelessly communicating, sensor data derived from sensor signals generated by the sensor (108) to a communication partner device (144), in particular to a mobile phone;
comprising an output unit (120), in particular an optical output unit, configured for outputting a perceivable, in particular a visible, signal which is indicative of a result of the sensing of sensor signals being characteristic for temperature and strain.

8. The carrier roller (100) of any of claims 1 to 7, comprising a processor (122) configured for processing the sensor signals for determining state information concerning the carrier roller (100).

9. The carrier roller (100) of claim 8, comprising at least one of the following featu res:
wherein the processor (122) is configured for determining the state information by determining whether or not the processed sensor signals indicate that an ohmic resistance of a sensor active material of the sensor (108) is within a predefined target range;
wherein the processor (122) is configured for determining the state information for determining or predicting a failure of the carrier roller (100), in particular at least one of the group consisting of a blockage of the bearing (106), and a breakage of the shaft (102) and/or of the drum (104).

10. The carrier roller (100) of any of claims 1 to 9, comprising at least one of the following features:
comprising a position determining unit (124) configured of determining a position of the carrier roller (100);
wherein the sensor (108) is a patterned layer of sensor active material, in particular a two-dimensionally patterned layer of sensor active material;
comprising at least one further sensor (108) arranged at another region of the shaft (102) than the sensor (108) and being configured for sensing sensor signals being characteristic for temperature and strain, wherein the sensors (108) are configured for operating independently of each other.

11. A conveyor device (150) for conveying goods, the conveyor device (150) comprising a plurality of carrier rollers (100) of any of claims 1 to 10 for carrying the goods during conveying.

12. The conveyor device (150) of claim 11,
further comprising a belt (152) and a drive unit (154) for driving the belt (152) for conveying the goods;
wherein the carrier rollers (100) are arranged within the belt (152) for carrying the goods during conveying.

13. A method of manufacturing a carrier roller (100) for carrying goods in a conveyor device (150), the method comprising:
mounting a rotatable drum (104) on a shaft (102);
arranging a bearing (106) between the shaft (102) and the drum (104) for enabling the drum (104) to rotate relative to the shaft (102);
arranging a sensor (108) at the shaft (102); and
configuring the sensor (108) for sensing sensor signals being characteristic for temperature and strain at the shaft (102).

14. The method of claim 13, wherein the method comprises applying the sensor (108) to a substrate (140) by printing, in particular by one of the group consisting of ink-jet printing and screen printing, sensor active material on the substrate (140).

15. The method of claim 14, comprising at least one of the following features:
wherein the method comprises covering the printed sensor (108) on the substrate (140) by a protection layer (142), the protection layer (142) being applied in particular by one of the group consisting of laminating, and varnishing;
wherein the method comprises attaching the substrate (140) with the printed sensor (108) to the shaft (102), in particular by an adhesive (166).
